Europäisches Patentamt

European Patent Office

Office européen des brevets

(11) Publication number: **0 089 687**

**B1**

(12) **EUROPEAN PATENT SPECIFICATION**

(45) Date of publication of patent specification: **26.11.86**

(51) Int. Cl.⁴: **H 04 Q 3/00**

(21) Application number: **83102858.4**

(22) Date of filing: **22.03.83**

(54) Method of and electronic device for detecting the lifting of the telephone handset in presence of ringing current.

(30) Priority: **24.03.82 IT 6737182**

(43) Date of publication of application:
**28.09.83 Bulletin 83/39**

(45) Publication of the grant of the patent:
**26.11.86 Bulletin 86/48**

(84) Designated Contracting States:
**BE CH DE FR GB LI NL SE**

(56) References cited:
**EP-A-0 034 339**
**DE-A-2 816 981**
**FR-A-2 356 325**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Melindo, Flavio**
**Via Valgioie 71**
**Torino (IT)**
Inventor: **Sartori, Mario**
**C.so Orbassano 191/1**
**Torino (IT)**

(74) Representative: **Riederer Freiherr von Paar zu Schönau, Anton et al**
**Freyung 615 Postfach 2664**
**D-8300 Landshut (DE)**

## Description

The present invention relates to subscriber telephone signalling and in particular it concerns an electronic circuit for detecting the lifting of the telephone handset in presence of ringing current.

In traditional telephone systems, the call is effected by means of a low-frequency (as a rule 25 Hz) high-voltage (typically 70 Veff) signal. The ringing current is emitted in series with the battery voltage, so that if the handset is on hook, there is only alternating current flow, while the d.c. component is blocked by the capacitor connected in series with the ringer.

The lifting of the handset from the hook closes the line loop with a low resistance; hence there is also a d.c. current flow which signals the occurred reply. As a consequence, the off-hook condition detection requires d.c. current detection in presence of more or less high a.c. current; in electromechanical exchanges said problem is solved by means of a relay with suitable characteristics.

In electronic exchanges, in particular in those equipped with solid-state interface units, the problem of effecting this detection is particularly serious.

The methods generally used in this case are two. The most immediate method uses a lowpass filter with a cut-off frequency of a few Hertz to separate the two components; yet it has the disadvantage of requiring capacitors of very high value and of presenting a long response time. In addition, it is ill-suited to be implemented with an integrated circuit.

The second method, better suited to integration, is based on the fact that the presence of a d.c. component changes the ratio between positive and negative half-periods of the ringing current; said ratio can be computed by means of digital circuits, such as those described for instance in the Patent Application No. 67252-A/80, filed in Italy in the name of CSELT, on the 19 February 1980 and corresponding to EP—A—0034339.

Yet, such a method is not usable when the d.c. voltage is much lower than the a.c. voltage, as, in this case, the variation of the ratio is very low and difficult to detect.

The above disadvantages are overcome and the technical problem is solved by the electronic circuit provided by the present invention, which is apt to detect the lifting of the handset in presence of ringing current. Said circuit allows the flow of d.c. current through the line loop to be detected in presence of considerably higher a.c. current, it is easy to integrate and requires a single external capacitor of low value.

The main object of the present invention is to provide a method of detecting the lifting of the telephone handset in presence of ringing-current flow through the line loop, said lifting causing a dc line current $Idc$ to flow in the loop, the detection being based on the charge voltage $Vc$ of a capacitor having a capacity $c$ by charging or discharging the capacitor in dependency of the dc line current, characterized in that a multiplication of the line current is effected both by a constant value $K1$ which is the ratio between the charging or discharging current of the capacitor and the dc line current, and by a chopping signal consisting of a train of pulses with a convenient ratio $K2$ between duration and period, and that the resulting signal undergoes an integrating operation over one or more complete periods $nT$ of the ringing current by the capacitor the charge voltage of which is

$$Vc = \frac{K1}{K2} \cdot \frac{Idc \cdot mT}{c}$$

and is compared with a voltage threshold, the comparison result indicating the presence or absence of the d.c. line current.

Another object of the invention is an electronic circuit for carrying out such method.

These and other characteristics of the present invention will be made clearer by the following description of a preferred embodiment thereof, given by way of example and not in a limiting sense, and by the annexed drawings, in which:

Fig. 1 is a block diagram of the circuit provided by the invention;

Fig. 2 is a circuit diagram of the block denoted by GD in Fig. 1;

Fig. 3 is a circuit diagram of the block denoted by CC in Fig. 1;

Fig. 4 is a circuit diagram of the block denoted by C2 in Fig. 1;

Fig. 5 shows the waveforms at the main circuit points.

It is known that the integral of a sinewave over a whole period (or over multiples of the period) is null: hence, if the integral of the line current is effected over the duration of an exact period, the contribution of the a.c. component and of all its overtones will be null, while the d.c. component will give a determined contribution. In this case the exact ringing current period is known as said current is locally generated.

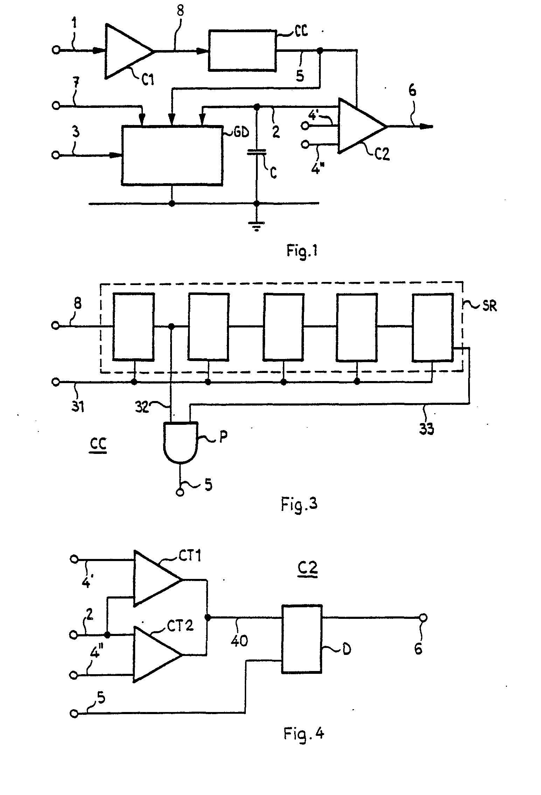

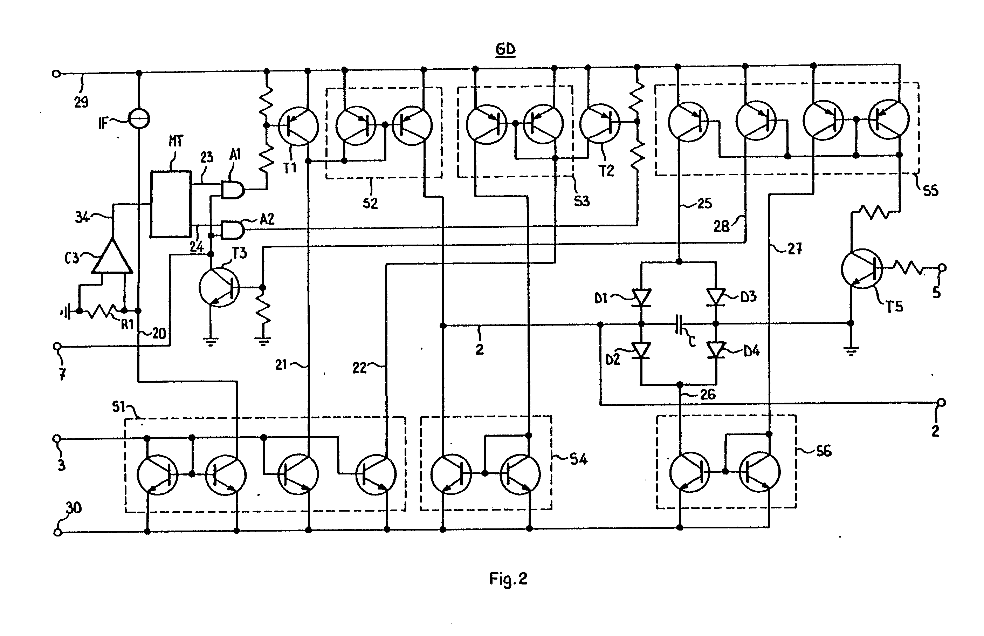

Such a principle is applied in the block diagram of Fig. 1. In it C1 is a limiting circuit, apt to give at the output, on wire 8, a square wave having a period equal to the period of the ringing voltage received at the input via wire 1.

CC is an ordinary circuit apt to generate at the output, connected to wire 5, a pulse in correspondence with each leading edge of the signal supplied by C1, GD is a circuit which controls the charging current of a capacitor C proportionally to the line current flowing through a wire 3, under the control of the commands received from circuit CC and of a chopping signal, with constant period, received via wire 7.

C2 is a circuit which compares the voltage across capacitor C with suitable threshold voltages applied to the inputs connected to wires 4' and 4'', when enabled by the signal supplied by CC on wire 5.

The operation of the circuit is the following. At the beginning of a ringing-voltage period, identified by a leading edge of the signal at the output of C1, circuit CC generates a pulse which through GD discharges capacitor C. From that instant the voltage across the capacitor is determined by the current supplied by circuit GD, and hence it is proportional to the integral of the current flowing through the line. At the end of a period T of the ringing voltage (or as an alternative after an integer number n of periods) voltage Vc across the capacitor results to be proportional to the only d.c. component of such current.

In particular, if d.c. current through the line is Idc, then

$$Vc = K1 \frac{Idc \cdot nT}{c}$$

where c is the capacity of capacitor C and K1 is the ratio between the current supplied by GD and that of the line.

At that instant, the leading edge of the pulse supplied by CC enables the operation of voltage comparator C2, by which it can be determined whether the d.c. component exceeds or not the predetermined threshold and it can be recognized the off-hook condition, supplying a suitable signal on wire 6. Immediately afterwards the next detection cycle begins.

· Once recognized the handset lifting in presence of the ringing current, a procedure analogous to that described in the already cited patent application can be started i.e. the ringing current emission is automatically interrupted at local level, waiting for a certain acknowledgement of the occurred lifting by the circuits of the line unit entrusted with it. If such an acknowledgment does not arrive within a predetermined time period, the call is reattempted, as in this case it can be supposed that the detection has erroneously occurred owing to line noises.

Circuit GD can be a normal current mirror with output/input ratio equal to K1. However, if practical-value capacitors and voltage in a range of a few volts are used, coefficient K1 gets too small. By way of example, a ratio K1 equal to 1:400, which is difficult to implement with integrated technology, would be necessary to obtain an integration voltage Vc of 1 V at a current Idc of 10 mA with a period T of 40 ms and a capacitance c of 1 µF.

This disadvantage can be overcome, if the circuit GD is activated only at a frequency much higher than that of the ringing current and for short time intervals with respect to the period considered. If the charging (or discharging) current is multiplied by a chopping signal consisting of a train of pulses with duration Ta and frequency 1/Tc, the voltage across the capacitor is equal to that obtainable by a current equal to K2 times the actually generated one, with K2=Tc/Ta.

At the end of the integration period there is:

$$Vc = \frac{K1}{K2} \cdot \frac{Idc \cdot nT}{c}$$

Since K2 can easily attain the value of many tens, also K1 can be increased by the same value.

Another point to be taken into account is that very often the detector of line current does not supply the algebraic sign of such a current, but its absolute value |IL|.

Hence, it is necessary to alternatively invert by a suitable circuit the direction of the current generated by GD whenever |IL|=0. In this case, as the phase of IL is not known a priori, the final voltage across the capacitor can be positive or negative, and C2 must then be a modulus comparator.

A possible circuit GD, together with capacitor C, is depicted in the circuit diagram of Fig. 2.

Line-current modulus |IL|, coming via wire 3 from sensors placed out of the circuit itself, drives a current mirror circuit S1, which generates in turn three equal currents flowing in wires 20, 21, 22.

Current flowing in wire 20 traverses also resistor R1, passing through it in opposite direction to the fixed-value current generated by a current source IF. Across R1 there is then obtained a voltage drop with positive or negative sign with respect to the ground depending on which current prevails.

This voltage drop is applied to the input terminals of a comparator C3, at the output of which on wire 34 a signal is then present, which assumes logic value "1" when the current on wire 20 is less than the current generated by IF and logic level "0" in the opposite case.

This signal is used as a clock signal for a flip-flop MT, the true output of which, connected to wire 23, passes therefore from a logic level to the other at each zero-crossing of current in wire 20. The complemented output is connected to wire 24.

Currents flowing through wires 21 and 22 feed current mirror circuits S2 and S3, enabled through transistors T1, T2 and AND gates A1 and A2 by the true output and by the complemented one of flip-flop MT. Circuit S3 drives in turn S4 and therefore, depending on the state of flip-flip MT, either the current furnished by S2 or drawn by S4 flows through wire 2, and, as a consequence, capacitor C is traversed by a positive or negative current. Gates A1 and A2 can be inhibited by the chopping signal present on 7 and, as a consequence, current flowing through capacitor C can be annulled; such signal, supplied from the outside, represents the constant K2, being characterized by a period Tc and by pulses with a time duration Ta. The channel synchronism signal, generally present in a PCM codec, i.e. a coder-decoder for coding and decoding speech signals as known e.g. from IEEE Journal of Solid-State Circuits, Vol. SC-16, No. 4, August 1981, pages 308—314, (3,9 µs/125 µs) of digital

switching means, could be conveniently used to this aim.

The diode bridge consisting of D1, D2, D3, D4 is driven through wires 25 and 26 by current mirror circuits S5 and S6. In particular, S5 is driven through T5 by the signal supplied by circuit CC (Fig. 1) on wire 5 and drives circuit S6 via wire 27. The pulse on wire 5 turns on the diodes and hence it causes C discharge.

The same pulse causes a current to flow through wire 28, at one of the outputs of S5, which inhibits through T3 gates A1 and A2, thus blocking possible charging currents of C.

Finally the positive power supply voltage e.g. +5V, is applied to wire 29, while the negative one, e.g. −5V, is applied to wire 30.

A possible embodiment of circuit CC, apt to supply at the output a pulse per each leading edge of the ringing signal limited by C1, is depicted in Fig. 3.

The square-wave signal, received via wire 8, is sent to the serial input of a 5-stage shift register SR, while the clock signal is applied to wire 31. The true output of the first stage and the one complemented by the last one are sent to an AND gate P, which supplies at the output on wire 5 the required pulse train.

When the input signal is at logic level "0", on wire 32 there is a level "0" and on wire 33 a level "1", hence on wire 5 the signal is at "0". At the input-signal transition from "0" to "1", after a clock period, on wire 32 the level passes to "1" and then at the output of P the level passes also to "1".

After four clock periods the level on wire 33 goes down to "0", followed by the signal at the output of P.

The already-cited chopping signal can be used as a clock signal.

Voltage comparator C2, apt to compare the voltage amplitude across the capacitor with the pre-determined threshold voltages, can be implemented, by instance, according to the scheme shown in Fig. 4.

Two comparators CT1 and CT2 have an input connected to the capacitor, via wire 2, and the other via wires 4' and 4'', connected to two threshold voltages with equal amplitude and opposite sign.

The outputs are connected in parallel and access via wire 40 the input of a flip-flop D, the clock input of which is connected to wire 5.

When the voltage amplitude across the capacitor exceeds the threshold amplitude, the signal at the output of CT1 and CT2 changes its logic level and, at the pulse arrival on wire 5, the variation is transferred to the output on wire 6.

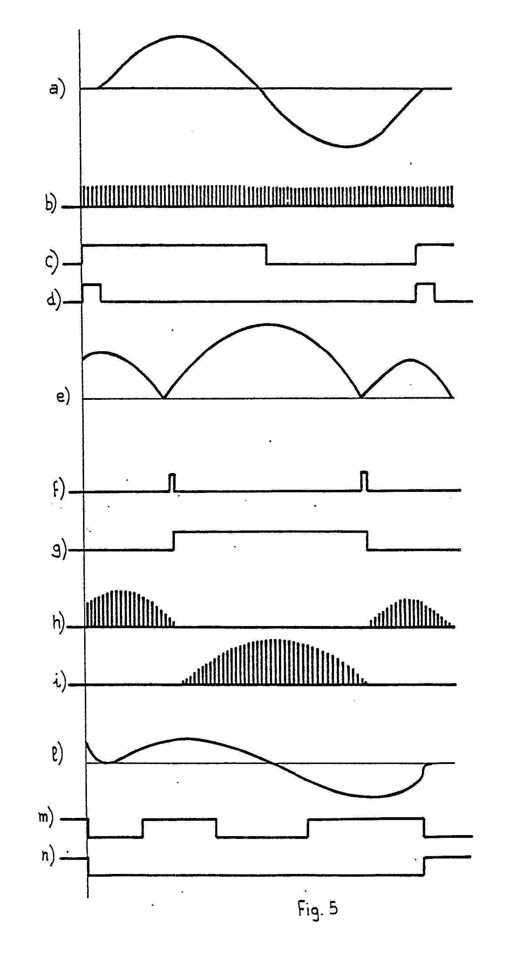

The waveforms present at the main points of the circuit are depicted in Fig. 5. Waveform a) is present on wire 1 (Fig. 1), b) on wire 7, c) on wire 8, d) on wire 5, e) on wire 3, f) on wire 34 (Fig. 2), g) on wire 23.

The waveform of the current supplied by S2 is denoted by h), the current drawn by S4 by i), the voltage on wire 2 by l), the voltage on wire 40 by m) and the voltage on wire 6 by n) (Fig. 4).

In the figure the ratio between the period of the waveform a), and the period of the waveform b), does not necessarily correspond to reality.

## Claims

1. A method of detecting the lifting of the telephone handset in presence of ringing-current flow through the line loop, said lifting causing a dc line current $Idc$ to flow in the loop, the detection being based on the charge voltage $Vc$ of a capacitor (C) having a capacitor c by charging or discharging the capacitor in dependency of the dc line current, characterized in that a multiplication of the line current is effected both by a constant value $K1$ which is the ratio between the charging or discharging current of the capacitor and the dc line current, and by a chopping signal consisting of a train of pulses with a convenient ratio $K2$ between period $(Tc)$ and duration $(Ta)$, and that the resulting signal undergoes an integrating operation over one or more complete periods $nT$ of the ringing current by the capacitor the charge voltage $Vc$ of which is

$$Vc = \frac{K1}{K2} \cdot \frac{Idc \cdot mT}{c}$$

and is compared with a voltage threshold, the comparison result indicating the presence or absence of the d.c. line current.

2. Method according to claim 1, characterized in that the initial and final instants of said integrating operation are obtained from the ringing voltage period.

3. Method as in claim 1 or 2, characterized in that said integrating operation is preceded by a complete discharging operation as well as by the contemporaneous interruption of the charging current of the integrating capacitor (c) at that initial instant.

4. Method as in any of claims 1 to 3, characterized in that the negative sign is allotted at alternate half-periods to the modulus of the line current, so as to obtain a signal reproducing the line current itself with the exception of the sign.

5. Electronic circuit for carrying out the method of any of claims 1 to 4, consisting of an integrating capacitor (C) to be charged or discharged by a current that depends on the dc line current and of the comparator (C2) comparing the charge voltage of the capacitor with a reference voltage, a detector (C1, CC) for the beginnings and the ends of the period of a ringing signal determining an integration period of the capacitor charge, characterized in that a signal representing the modulus of the line current is sent to a first current mirror circuit (S1), equipped with three outputs (20, 21, 22), one of which (20) is connected to a circuit (C3, MT) which, in correspondence with the minimum current values, generates a logic-level transition on two complementary outputs (23, 24), which alternatingly enable through a first gate (A1) a second mirror circuit (S2) and through a second gate (A2) a third mirror circuit (S3), said gates being driven by the currents supplied by the remaining two outputs of said first mirror circuit and apt respectively to supply a positive charging current and, through a fourth mirror circuit (S4), a negative charging current for the integrating capacitor (C), said first and second gates (A1, A2) being inhibited both by a chopping signal (from 7) delivered from a pulse source, and by a discharging signal (from T3) which, being simultaneously applied to the capacitor through a fifth mirror circuit (S5), a diode bridge (D1, D2, D3, D4) and a sixth mirror circuit (S6), causes complete discharge of the capacitor at each beginning of the integration time.

6. Electronic circuit as in claim 5, characterized in that said discharging signal is generated by limiting the ringing signal and supplying a pulse at each period, or at each complete number of periods, of the ringing signal itself.

7. Electronic circuit as in claim 6, characterized in that said pulse is obtained by sending the limited ringing signal to the serial input of a shift register (SR), by extracting in parallel two outputs of different stages, one output being true and the other being complemented, and by sending them to a gate (P) at the output of which the desired pulse is available.

8. Electronic circuit as in any of claims 5 to 7, characterized in that the signal obtained by said integrating operation is compared with two threshold voltages with equal amplitude and opposite sign in two comparators (CT1, CT2), the outputs of which connected in parallel are sent to the data input of the flip-flop (D), which uses said discharging signal as a clock signal and supplies at the output a signal, the logic level of which represents the occurred lifting of the handset in presence of the ringing current.

**Patentansprüche**

1. Verfahren zum Erkennen des Abhebens eines Fernsprecher-Handapparats, während Rufstrom durch die Leitungsschleife fließt, wobei dieses Abheben bewirkt, daß ein Leitungs-Gleichstrom Idc in der Schleife fließt, und das Erkennen auf der Ladespannung Vc eines Kondensators (C) mit der Kapazität c durch Laden oder Entladen des Kondensators in Abhängigkeit vom Leitungs-Gleichstrom beruht, dadurch gekennzeichnet, daß man den Leitungsstrom sowohl mit einem konstanten Wert K1, der das Verhältnis des Lade- oder Entladestroms des Kondensators zum Leitungs-Gleichstrom angibt, als auch mit einem Unterbrechersignal, das aus einer Impulsfolge eines gebenen Verhältnisses K2 zwischen Periode (Tc) und Impulsdauer (Ta) besteht, multipliziert, und daß man das resultierende Signal einer Integration über eine oder mehrere vollständige Perioden nT des Rufstroms durch den Kondensator unterwirft, dessen Ladespannung Vc ist:

$$Vc = \frac{K1}{K2} \cdot \frac{Idc \cdot nT}{c},$$

und es dann mit einer Spannungsschwelle vergleicht, wobei das Vergleichsergebnis das Vorhandensein oder Nichtvorhandensein des Leitungs-Gleichstroms anzeigt.

2. Verfahren nach Anspruch 1, dadurch gekennzeichnet, daß man den Anfangszeitpunkt und den Endzeitpunkt des Integrationsvorgangs aus der Periode der Rufspannung ableitet.

3. Verfahren nach Anspruch 1 oder 2, dadurch gekennzeichnet, daß man vor dem Integrationsvorgang eine vollständige Entladung und die gleichzeitige Unterbrechung des Ladestroms des integrierenden Kondensators (C) im Anfangszeitpunkt durchführt.

4. Verfahren nach einem der Ansprüche 1 bis 3, dadurch gekennzeichnet, daß man das negative Vorzeichen zu alternierenden Halbperioden dem Betrag des Leitungsstroms zuordnet und so ein den Leitungsstrom selbst mit Ausnahme des Vorzeichens wiedergebendes Signal erhält.

5. Elektronische Schaltung zur Durchführung des Verfahrens nach einem der Ansprüche 1 bis 4, bestehend aus einem integrierenden Kondensator (C), der von einem Strom zu laden oder zu entladen ist, der vom Leitungs-Gleichstrom abhängt, und aus einem Komparator (C2), der die Ladespannung des Kondensators mit einer Bezugsspannung vergleicht, wobei ein Detektor (C1, CC) für die Anfänge und die Enden der Perioden des Rufsignals eine Integrationsperiode der Kondensatorladung bestimmt, dadurch gekennzeichnet, daß ein den Betrag des Leitungsstroms wiedergebenes Signal einer ersten Stromspiegelschaltung (S1) eingespeist wird, die mit drei Ausgängen (20, 21, 22) versehen ist, von denen einer (20) mit einer Schaltung (C3, MT) verbunden ist, die entsprechend den Stromminima einen logischen Pegelübergang an zwei komplementären Ausgängen (23, 24) erzeugt, die alternierend über ein erstes Gatter (A1) eine zweite Stromspiegelschaltung (S2), und über ein zweites Gatter (A2) eine dritte Stromspiegelschaltung (S3) aktivieren, wobei die Gatter von den von den beiden weiteren Ausgängen der ersten Stromspiegelschaltung gelieferten Strömen getrieben sind und einen positiven Ladestrom bzw. über eine vierte Stromspiegelschaltung (S4) einen negativen Ladestrom für den Integrationskondensator (C) liefern, wobei das erste und das zweite Gatter (Al, A2) sowohl von einer Unterbrechungssignal (von 7), das von einer Impulsquelle geliefert wird, als auch von einem Entladesignal (von T3) gesperrt werden, das gleichzeitig an den Kondensator über eine fünfte Spiegelschaltung (S5), eine Diodenbrücke (D1, D2, D3, D4) und eine sechste Spiegelschaltung (S6) angelegt wird und eine vollständige Entladung des Kondensators zu Beginn jeder Integrationszeit bewirkt.

6. Elektronische Schaltung nach Anspruch 5, dadurch gekennzeichnet, daß das Entladesignal durch Begrenzung des Rufsignals und Lieferung eines Impulses bei jeder Periode oder jeder vollständigen Zahl von Perioden des Rufsignals erzeugt wird.

7. Elektronische Schaltung nach Anspruch 6, dadurch gekennzeichnet, daß der Impuls dadurch erhalten wird, daß das begrenzte Rufsignal an den Serieneingang eines Schieberegisters (SR) gegeben wird und parallel zwei Ausgänge unterschiedlicher Stufen abgefragt werden, von denen einer das betreffende normale und der andere das komplementäre Ausgangssignal führt, und sie an ein Gatter (P) angelegt werden, an dessen Ausgang der gewünschte Impuls abnehmbar ist.

8. Elektronische Schaltung nach einem der Ansprüche 5 bis 7, dadurch gekennzeichnet, daß das durch den Integrationsvorgang erhaltene Signal mit zwei Schwellenspannungen gleicher Amplitude und entgegengesetzten Vorzeichens in zwei Komparatoren (CT1, CT2) verglichen wird, deren parallel geschaltete Ausgänge an den Dateneingang eines Flip-Flops (D) geschaltet sind, der das Entladesignal als Taktsignal verwendet und ausgangsseitig ein Signal abgibt, dessen logischer Pegel das durchgeführte Abheben des Handapparats während des Fließens von Rufstrom anzeigt.

**Revendications**

1. Procédé pour la détection du décrochage du combiné en présence du flux de courant de sonnerie sur la boucle d'abonné, ledit décrochage provoquant le flux d'un courant de ligne continu Idc dans la boucle, la détection étant basée sur la tension de charge Vc d'un condensateur (C) ayant une capacité c en chargeant ou déchargeant le condensateur sur la base du courant de ligne continu, caractérisé en ce que l'on effectue la multiplication du courant de ligne soit par une valeur constante K1 qui est le rapport entre le courant de charge ou de décharge du condensateur et le courant de ligne continu, soit par un signal d'échantillonnage constitué par une séquence d'impulsions avec un rapport opportun K2 entre période (Tc) et durée (Ta) et l'on soumet le signal obtenu à une opération d'intégration pour la durée d'une ou de plusieurs périodes entières nT du courant de sonnerie à l'aide du condensateur dont la tension de charge Vc est:

$$V_c = \frac{K1}{K2} \cdot \frac{Idc \cdot nT}{c}$$

et on le compare avec un seuil de tension dans le but de détecter la presence ou l'absence de courant continu en ligne.

2. Procédé suivant la revendication 1, caractérisé en ce que les instants initial et final de ladite opération d'intégration sont obtenus de la période de la tension de sonnerie.

3. Procédé suivant la revendication 1 ou 2, caractérisé en ce que ladite opération d'intégration est précédée par une opération de décharge complète et par l'interruption simultanée du courant de charge de condensateur d'intégration (C) audit instant initial.

4. Procédé suivant l'une quelconque des revendications de 1 à 3, caractérisé en ce que l'on assigne pendant des demi-périodes alternées le signe négatif au module du courant de ligne, de manière à obtenir un signal qui reproduit le courant de ligne même, excepté le signe.

5. Circuit électronique pour mettre en oeuvre le procédé d'une quelconque des revendications de 1 à 4, qui se compose d'une condensateur d'intégration (C) à charger ou à décharger par un courant qui dépend du courant de ligne continu et d'un comparateur (C2) qui compare la tension de charge du condensateur avec une tension de référence, d'un détecteur (C1, CC) des commencements et des fins des périodes du signal de sonnerie qui détermine une période d'intégration de la charge du condensateur, caractérisé en ce qu'un signal qui représente le module du courant de ligne est envoyé à un premier miroir de courant (S1), fourni de trois sorties (20, 21, 22), dont une (20) est connectée à un circuit (C3, MT) qui, en correspondance avec les valeurs minimales de courant, engendre une transition de niveau logique sur deux sorties complémentaires (23, 24) lesquelles alternativement valident à travers une première porte (A1) un deuxième miroir de courant (S2) et à travers une deuxième porte (A2) un troisième miroir de courant (S3), pilotés par les courants fournis par les deux autres sorties dudit premier miroir de courant et aptes respectivement à fournir un courant de charge positive et, à travers un quatrième miroir de courant (S4), un courant de charge négative pour le condensateur d'intégration (C), ces première et deuxième portes étant inhibées soit par un signal d'échantillonnage (provenant de 7) fourni par une source d'impulsions, soit par un signal de décharge (provenant de T3) qui, appliqué en même temps au condensateur à travers un cinquième miroir de courant (S5), un pont de diodes (D1, D2, D3, D4) et un sixième miroir de courant (S6), provoque la décharge complète du condensateur à chaque commencement du temps d'intégration.

6. Circuit électronique suivant la revendication 5, caractérisé en ce que ledit signal de décharge est engrendré en limitant le signal de sonnerie et en fournissant une impulsion à chaque période, ou à chaque nombre entier de périodes, du signal de sonnerie même.

7. Circuit électronique suivant la revendication 6, caractérisé en ce que ladite impulsion est obtenue en envoyant le signal de sonnerie limité à l'entrée sérielle d'un registre à décalage (SR), en prélevant en parallèle deux sorties d'étages différents, dont l'une est vraie et l'autre est complémentaire et en les envoyant à une porte (P), à la sortie de laquelle l'impulsion désirée est disponible.

8. Circuit électronique suivant l'une quelconque des revendications de 5 à 7, caractérisé en ce que le signal obtenu par ladite opération d'intégration est comparé avec deux tensions de seuil d'amplitude égale et de signe opposé en deux comparateurs (CT1, CT2), dont les sorties connectées en parallèle sont envoyées à l'entrée des données d'une bascule (D) qui utilise ledit signal de décharge tel qu'un signal d'horloge et fournit à la sortie un signal, dont le niveau logique est représentatif du décrochage effectué du combiné en présence de courant de sonnerie.

Fig.1

Fig.3

Fig.4

1

Fig.2

Fig. 5